# EUROPÄISCHE PATENTSCHRIFT

(11) **EP 1 532 508 B1**
(45) Veröffentlichungstag und Bekanntmachung des Hinweises auf die Patenterteilung: **02.11.2006**
(21) Anmeldenummer: 03793587.1
(22) Anmeldetag: 18.07.2003
(51) Int. Cl.: G06F 1/00

(54) **DATENVERARBEITUNGSVORRICHTUNG**
DATA PROCESSING DEVICE
DISPOSITIF DE TRAITEMENT DE DONNEES

(30) Priorität: 30.08.2002 DE 10240088
(43) Veröffentlichungstag der Anmeldung: 25.05.2005
(73) Patentinhaber: Infineon Technologies AG, 81669 München (DE)
(72) Erfinder: GAIL, Markus, 81547 München (DE); OTTERSTEDT, Jan, 82008 Unterhaching (DE)
(74) Vertreter: Epping - Hermann - Fischer
(86) Internationale Anmeldenummer: PCT/DE2003/002430
(87) Internationale Veröffentlichungsnummer: WO 2004/023274

(56) Entgegenhaltungen:
- EP-A- 0 897 151
- US-A- 5 241 547

## Beschreibung

Die Erfindung betrifft eine Datenverarbeitungsvorrichtung mit einer Ausführungseinheit und einer einen Programmzähler aufweisenden Ablaufsteuerung.

Derartige Datenverarbeitungsvorrichtungen sind beispielsweise als Mikrocontroller bekannt. Die Ausführungseinheit bearbeitet arithmetische und logische Befehle. Die beteiligten Operanden stehen entweder in den Daten- bzw. Adreßregistern oder werden über einen internen Bus angelegt. Die Ablaufsteuerung besteht in der Regel aus einem Befehls-Decoder und einem Programmzähler. Der Programmzähler ruft die Befehle des Programms nacheinander auf. Der Befehls-Decoder löst dann die zur Ausführung der Befehle erforderlichen Schritte aus.

Beim Start eines Programms wird der Programmzähler auf eine Startadresse gesetzt. Diese Adresse wird über einen Adreßbus an einen Speicher übertragen. Bei einem auf einem Kontrollbus übertragenen Lesesignal erscheint der Inhalt des betroffenen Speicherbereichs auf einem Datenbus und wird in dem Befehls-Decoder gespeichert. Der Befehls-Decoder löst dann die zur Durchführung des Befehls notwendigen Operationen aus. Der Befehls-Decoder setzt nach Ausführung des Befehls den Programmzähler auf die Adresse des nächsten Befehls.

Der Befehl, der als nächstes ausgeführt wird, hängt also immer von der in dem Programmzähler stehenden Adresse ab.

Diese Schlüsselfunktion des Programmzählers wird bei dem Angriff von Hackern auf Chipkarten- und Sicherheits-ICs ausgenutzt. Die Angreifer versuchen, die bei der Programmausführung involvierten Komponenten so zu stören, daß die vorgesehene Programmsequenz verändert wird und der Mikrocontroller einen anderen als den vorgesehenen Code ausführt. Eine solche ungewollte Änderung des Programmablaufs wird als "Verspringen" des Mikrocontrollers bezeichnet. Um ein Verspringen des Mikrocontrollers auszulösen, versuchen Angreifer, die Taktfrequenz zu erhöhen oder Störungen auf die Taktleitung oder die Versorgungsspannungsleitungen einzukoppeln.

Um einen solchen Angriff, der zum Verspringen des Mikrocontrollers führt, zu verhindern, ist es bekannt, mehrere Sensoren vorzusehen, die beispielsweise eine Überfrequenz oder Störungen auf den Versorgungsleitungen detektieren. Spricht beispielsweise der Überfrequenzsensor an, weil der Mikrocontroller mit einer erhöhten Taktfrequenz betrieben wird, wird von einem Angriff ausgegangen und es erfolgt ein Sicherheits-Reset des Mikro-Controllers. Die genannten Sensoren sind jedoch verhältnismäßig aufwendig in der Implementierung, weil sie analoge Schaltungskomponenten benötigen.

Ein weiteres Beispiel für die Implementierung einer Datenverarbeitungsvorrichtung gegen unerwartete Änderungen des Programmablauf ist aus der Veröffentlichung US 5241547 bekannt, bei der ein Fehler im Adresswort eines Befehls durch ein Prüfbit erfasst wird.

Aufgabe der Erfindung ist es, eine Datenverarbeitungsvorrichtung anzugeben, bei der ein Verspringen sicher und einfach erkannt wird.

Diese Aufgabe wird erfindungsgemäß durch eine Datenverarbeitungsvorrichtung der eingangs genannten Art gelöst, die durch einen Programmzähler-Sensor gekennzeichnet ist, der mit einem Datenbus und dem Programmzähler verbunden ist, mit Mitteln zur Ermittlung der Adresse eines als nächstes auszuführenden Befehls aus über den Datenbus übergebenen Daten und einem Vergleicher, der die ermittelte Adresse mit dem Inhalt des Programmzählers vergleicht und bei einer Abweichung ein Alarmsignal auslöst.

Der Vorteil der Erfindung besteht darin, daß nicht mehrere aufwendige Sensoren vorgesehen werden müssen, die durch Detektion von Störungen, die zu einem Verspringen führen könnten, indirekt die Gefahr eines Verspringens ermitteln. Stattdessen wird mit den parallel zu dem Programmzähler arbeitenden Mitteln zur Ermittlung der Adresse eines als nächstes auszuführenden Befehls unabhängig von dem Programmzähler die Adresse des nächsten Befehls ermittelt. Bei einer ordnungsgemäßen Betriebsweise muß die ermittelte Adresse mit dem Inhalt des Programmzählers übereinstimmen.

Besonders vorteilhaft ist es, wenn sowohl die Daten des Datenbusses als auch der Inhalt des Programmzählers verzögert verarbeitet werden. Dadurch wird verhindert, daß sich durch Angreifer erzeugte Störungen sowohl auf den Programmzähler als auch auf den Programmzähler-Sensor auswirken.

Besonders vorteilhaft ist es daher auch, wenn der Programmzähler-Sensor in einer anderen Schaltungstechnik als die Ablaufsteuerung mit dem Programmzähler ausgeführt ist. Dadurch wird erreicht, daß sich die Empfindlichkeit auf Störungen und das Verhalten bei Störungen unterscheiden.

Der erfindungsgemäße Programmzähler-Sensor läßt sich besonders einfach und kostengünstig herstellen, da er nur aus Logikkomponenten aufgebaut werden kann und keine Analogkomponenten erforderlich sind. Dabei ist es ein weiterer Vorteil, daß der Programmzähler-Sensor in der normalen Logik verborgen werden kann und so vor einem physikalischen Angriff geschützt ist. Darüber hinaus ist ein solcher Sensor wesentlich einfacher zu testen als ein Sensor mit Analogkomponenten.

Die Erfindung wird nachfolgend anhand eines Ausführungsbeispiels näher erläutert. Die einzige Figur zeigt eine schematische Darstellung eines Mikrocontrollers mit einem erfindungsgemäßen Programmzähler-Sensor.

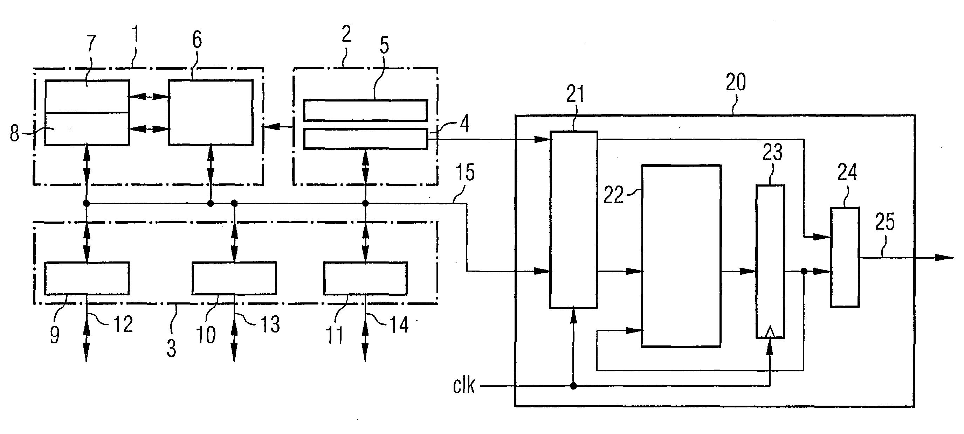

In der linken Hälfte der Figur 1 ist ein Mikrocontroller nach dem Stand der Technik mit den wesentlichen Komponenten dargestellt. Er weist eine Ausführungseinheit 1, eine Ablaufsteuerung 2 und ein Bus-Interface 3 auf. Die Ausführungseinheit 1 beinhaltet ein Rechenwerk 6 sowie ein Datenregister 7 und ein Adreßregister 8. Die Ablaufsteuerung 2 umfaßt einen Programmzähler 4 und einen Befehlsdecoder 5. Das Bus-Interface besitzt Treiber 9, 10 und 11 für einen Datenbus 12, einen Kontrollbus 13 und einen Adreßbus 14. Die Ausführungseinheit 1, die Ablaufsteuerung 2 und das Bus-Interface 3 sind über einen internen Bus 15 miteinander verbunden. Die grundlegende Funktionsweise dieses Mikro-Controllers nach dem Stand der Technik wurde in der Beschreibungseinleitung bereits dargestellt.

In der rechten Hälfte der Figur 1 ist ein erfindungsgemäßer Programmzähler-Sensor gezeigt, durch den ein Mikrocontroller nach dem Stand der Technik erweitert ist. Der Programmzähler-Sensor 20 weist eine durch Register gebildete Verzögerungsvorrichtung 21, eine Logik 22 zur Erkennung von Befehlen und neuen Programmzähler-Werten sowie eine Programmzähler-Nachbildung 23 auf. Darüber hinaus ist ein Vergleicher 24 vorgesehen, der den in der Programmzähler-Nachbildung 23 gespeicherten Wert mit dem Inhalt des eigentlichen Programmzählers 4, der in diesem Ausführungsbeispiel durch die Verzögerungsvorrichtung 21 verzögert bereitgestellt wird, vergleicht. Die Register der Verzögerungsvorrichtung 21 speichern den aktuellen Inhalt des Programmzählers 4 sowie übergebene Daten 15, um so in dem Programmzähler-Sensor 20 eine zeitlich versetzte Ermittlung eines Programmzähler-Wertes gegenüber der Ablaufsteuerung 2 zu erhalten. Angriffe, die zur falschen Festsetzung eines neuen Werts für den Programmzähler 4 führen (Verspringen), führen deswegen nicht auch zu einem Fehler bei der Ermittlung des als nächstes auszuführenden Befehls in dem Programmzähler-Sensor 20, wodurch die Zuverlässigkeit der Angriffserkennung erhöht wird. Die Logik 22 zur Erkennung von Befehlen und neuen Programmzähler-Werten sowie die Programmzähler-Nachbildung 23 entsprechen funktional den Funktionseinheiten in der Ablaufsteuerung 2, die dort für die Ermittlung des neuen Wertes für den Programmzähler 4 zuständig sind.

Erfindungsgemäß erfolgt also eine parallele Ermittlung des neuen Programmzähler-Wertes durch den Programmzähler-Sensor 20. Der Inhalt der Programmzähler-Nachbildung 23 wird sodann mit dem Inhalt des Programmzählers 4 in einem Vergleicher 24 verglichen. Im Ausführungsbeispiel von der Figur 1 erfolgt dies zu einem späteren Zeitpunkt gegenüber der Festsetzung des Inhalts des Programmzählers 4. Die durch die Register 21 zur Verzögerung verursachte zeitliche Verschiebung des Vergleichs sollte mindestens ein Takt betragen, kann aber auch auf mehrere Takte ausgedehnt werden. Für die Datenverarbeitung in dem Programmzähler-Sensor 20 wird diesem ein Taktsignal CLK zugeführt.

Die übergebenen Daten 15 werden durch die Logik 22 zur Erkennung von Befehlen fortlaufend überprüft, ob sie Befehle enthalten und ob diese neue Werte für den Programmzähler bzw. die Programmzähler-Nachbildung 23 aufweisen. Sobald ein Befehl erkannt wird, der eine Adresse eines nachfolgend auszuführenden Befehls enthält (z. B. Sprungbefehl), wird die Adresse des neuen Befehls in der Programmzähler-Nachbildung 23 abgelegt. Bewirkt der erkannte Befehl keine explizite Veränderung des Programmzählers, liegt also ein linearer Programmablauf vor, so wird die in der Programmzähler-Nachbildung 23 abgelegte Adresse entsprechend der Befehlsbreite inkrementiert und zeigt somit auf den linear nächsten abzuarbeitenden Befehl, wie es auch in der Ablaufsteuerung 2 für den Programmzähler 4 geschieht.

Stellt der Vergleicher 24 fest, daß sich die verglichenen Inhalte der Programmzähler-Nachbildung 23 und des Programmzählers 4 unterscheiden, so gibt er ein Alarmsignal 25 aus. Dies kann nachfolgend dazu verwendet werden, einen Sicherheits-Reset der Datenverarbeitungsvorrichtung durchzuführen. Es wäre aber auch möglich, andere Gegenmaßnahmen, ausgelöst von dem Alarmsignal 25, durchzuführen.

Die schematische Darstellung von Figur 1 zeigt die Komponenten eines Mikrocontrollers nach dem Stand der Technik und die des Programmzähler-Sensors 1 getrennt voneinander. In einer realen Ausführung sind die Komponenten des Programmzähler-Sensors 20 aber in die Schaltung integriert, die auch die Standardkomponenten umfaßt. Es ist daher sehr schwierig, den Programmzähler-Sensor 20 in der Gesamtschaltung zu erkennen, so daß ein guter Schutz vor einem physikalischen Angriff durch einen Angreifer gegeben ist. Schutzmechanismen, die die Standardkomponenten des Mikro-Controllers schützen, bewirken so automatisch auch einen Schutz für die Komponenten des Programmzähler-Sensors 20.

Andererseits ist es vorteilhaft, den Programmzähler-Sensor 20 in einer anderen Schaltungstechnik auszuführen als den eigentlichen Programmzähler 4, weil somit sichergestellt ist, daß diese Komponenten auf Störungen unterschiedlich reagieren.

### Bezugszeichenliste

- 1: Ausführungseinheit
- 2: Ablaufsteuerung
- 3: Bus-Interface
- 4: Programmzähler
- 5: Befehls-Decoder
- 6: Rechenwerk
- 7: Daten-Register
- 8: Adreß-Register
- 9: Daten-Bus-Treiber
- 10: Kontroll-Bus-Treiber
- 11: Adreß-Bus-Treiber
- 12: Daten-Bus
- 13: Kontroll-Bus
- 14: Adreß-Bus
- 15: interner Bus
- 20: Programmzähler-Sensor
- 21: Register zur Verzögerung
- 22: Logik zur Erkennung von Befehlen und neuen Programmzähler-Werten
- 23: Programmzähler-Nachbildung
- 24: Vergleicher
- 25: Alarmsignal
- CLK: Taktsignal

## Patentansprüche

1. Datenverarbeitungsvorrichtung mit
- einer Ausführungseinheit (1) und
- einer einen Programmzähler (4) aufweisenden Ablaufsteuerung (2),
**gekennzeichnet durch**
- einen Programmzähler-Sensor (20), der mit einem Datenbus und dem Programmzähler (4) verbunden ist, mit
- Mitteln (22) zur Ermittlung der Adresse eines als nächstes **durch** die Ausführungseinheit (1) auszuführenden Befehls aus über den Datenbus übergebenen Daten und
- einem Vergleicher (24), der die ermittelte Adresse mit dem Inhalt des Programmzählers (4) vergleicht und bei einer Abweichung ein Alarmsignal (25) auslöst.

2. Datenverarbeitungsvorrichtung nach Anspruch 1,
**dadurch gekennzeichnet, daß**
der Programmzähler-Sensor (20) eine Verzögerungsvorrichtung (21) aufweist zur Verzögerung der Daten des Datenbusses und des Inhalts des Programmzählers (4).

3. Datenverarbeitungsvorrichtung nach Anspruch 1 oder 2,
**dadurch gekennzeichnet, daß**
das Alarmsignal (25) ein Reset der Datenverarbeitungsvorrichtung auslöst.

4. Datenverarbeitungsvorrichtung nach einem der Ansprüche 1 bis 3,
**dadurch gekennzeichnet, daß**
der Programmzähler-Sensor (20) in einer anderen Schaltungstechnik als die Ablaufsteuerung (2) ausgeführt ist.

## Claims

1. Data processing apparatus having
- an execution unit (1) and
- a flow controller (2) which has a program counter (4),
**characterized by**
- a program counter sensor (20) which is connected to a data bus and to the program counter (4), having
- means (22) for ascertaining the address of an instruction which is to be executed next by the execution unit (1) from data transferred via the data bus, and
- a comparator (24) which compares the ascertained address with the content of the program counter (4) and triggers an alarm signal (25) if there is any discrepancy.

2. Data processing apparatus according to Claim 1,
**characterized in that**
the program counter sensor (20) has a delay apparatus (21) for delaying the data on the data bus and the content of the program counter (4).

3. Data processing apparatus according to Claim 1 or 2 **characterized in that** the alarm signal (25) triggers a reset for the data processing apparatus.

4. Data processing apparatus according to one of Claims 1 to 3,
**characterized in that**
the program counter sensor (20) is produced using different circuit technology than the flow controller (2).

## Revendications

1. Dispositif de traitement de données ayant :
- une unité d'exécution (1) et
- une commande séquentielle (2) comportant un compteur de programme (4),
**caractérisé par** :
- un capteur de compteur de programme (20) qui est relié à un bus de données et au compteur de programme (4), avec
- des moyens (22) pour la détermination de l'adresse d'une prochaine instruction à exécuter par l'unité d'exécution (1) à partir de données transférées sur le bus de données, et
- un comparateur (24) qui compare l'adresse déterminée au contenu du compteur de programme (4) et qui déclenche un signal d'alarme (25) en cas de différence.

2. Dispositif de traitement de données selon la revendication 1,
**caractérisé par le fait que** le capteur de compteur de programme (20) comporte un dispositif retardateur (21) pour retarder les données du bus de données et le contenu du compteur de programme (4).

3. Dispositif de traitement de données selon la revendication 1 ou 2,
**caractérisé par le fait que** le signal d'alarme (25) déclenche une réinitialisation du dispositif de traitement de données.

4. Dispositif de traitement de données selon l'une des revendications 1 à 3,
**caractérisé par le fait que** le capteur de compteur de programme (20) est réalisé dans une autre technique de circuit que la commande séquentielle (2).
